# EUROPEAN PATENT APPLICATION

(11) **EP 1 467 125 A2**
(43) Date of publication of application: **13.10.2004**
(21) Application number: 03018592.0
(22) Date of filing: 19.08.2003
(51) Int. Cl.: F16H 48/06

(54) **Planetary differential gear**

(30) Priority: 10.04.2003 CN 03243270
(71) Applicant: Liu, Yen Hsiang, Taipei hsien (TW)
(72) Inventor: Liu, Yen Hsiang, Taipei hsien (TW)
(74) Representative: Helms, Joachim, Dipl.-Ing. Patentanwalt

(57) **Abstract**

A differential gear includes a main gear wheel rotates on an imaginary axis and having a first side and a second side opposite to the first side, a first output device, the first output device having a first sun gear pivoted to the first side of the main gear wheel for free rotation on the imaginary axis and a first output shaft extended from the first sun gear along the imaginary axis, a second output device, the second output device having a second sun gear pivoted to the second side of the main gear wheel for free rotation on the imaginary axis and a second output shaft extended from the second sun gear along the imaginary axis, and a first planet gear set, the first planet gear set having a first planet gear pivoted to the first side of the main gear wheel and meshed with the first sun gear, a second planet gear pivoted to the first side of the main gear wheel and meshed with the first planet gear, and a third planet gear pivoted to the second side of the main gear wheel and meshed with the second sun gear for synchronous rotation with the second planet gear in same direction, the number of teeth of the second planet gear being less than the first and the third planet gear.

## Description

### BACKGROUND OF THE INVENTION

### 1. Field of the invention:

The present invention relates to a differential gear and, more particularly, to a simple structure of high-performance differential gear.

### 2. Description of the Related Art:

The transmission system of a motor vehicle is coupled between the motor and the wheels to provide a proper speed reducing ratio and a differential effect between the left and right wheels. For example, when the rear-wheel drive drives the motor vehicle to turn to the right, the revolving speed of the rear left wheel must be faster than the rear right wheel, forming a big radius of gyration and a small radius of gyration disposed in parallel to achieve the turning.

Various differential gears have been disclosed for use in motor vehicles. However, conventional differential gears are commonly comprised of a big number of gears. Due to complicated structure, conventional differential gears may fail to function easily, and much energy may be lost during friction among gears. Further, the maintenance work of conventional differential gears is also complicated.

Therefore, it is desirable to provide a differential gear that eliminates the aforesaid drawbacks.

### SUMMARY OF THE INVENTION

The present invention has been accomplished under the circumstances in view. It is one object of the present invention to provide a differential gear, which uses a simple planet gear set to provide a differential effect, achieving the advantage of simple structure. It is another object of the present invention to provide a differential gear, which uses less number of parts to achieve a high transmission effect.

To achieve these and other objects of the present invention, the differential gear is to be driven by a driving device to rotate a first driven member and a second driven member, comprising: a main gear wheel to be driven by the driving gear to rotate on an imaginary axis, the main gear wheel having a first side and a second side opposite to the first side; a first output device, the first output device comprising a first sun gear pivoted to the first side of the main gear wheel for free rotation on the imaginary axis, and a first output shaft extended axially outwardly from the center of the first sun gear along the imaginary axis and adapted to rotate the first driven member; a second output device, the second output device comprising a second sun gear pivoted to the second side of the main gear wheel for free rotation on the imaginary axis, and a second output shaft extended axially outwardly from the center of the second sun gear along the imaginary axis and adapted to rotate the second driven member; and a first planet gear set, the first planet gear set comprising a first planet gear pivoted to the first side of the main gear wheel and meshed with the first sun gear, a second planet gear pivoted to the first side of the main gear wheel and meshed with the first planet gear, and a third planet gear pivoted to the second side of the main gear wheel and meshed with the second sun gear for synchronous rotation with the second planet gear in direction same as the second planet gear, the number of teeth of the second planet gear being less than the first and the third planet gear.

### BRIEF DESCRIPTION OF THE DRAWINGS

The present invention can be more fully understood by reference to the following description and accompanying drawings, in which:
FIG. 1 is a sectional front view showing a differential gear installed in the gear box of a motor vehicle according to the present invention;

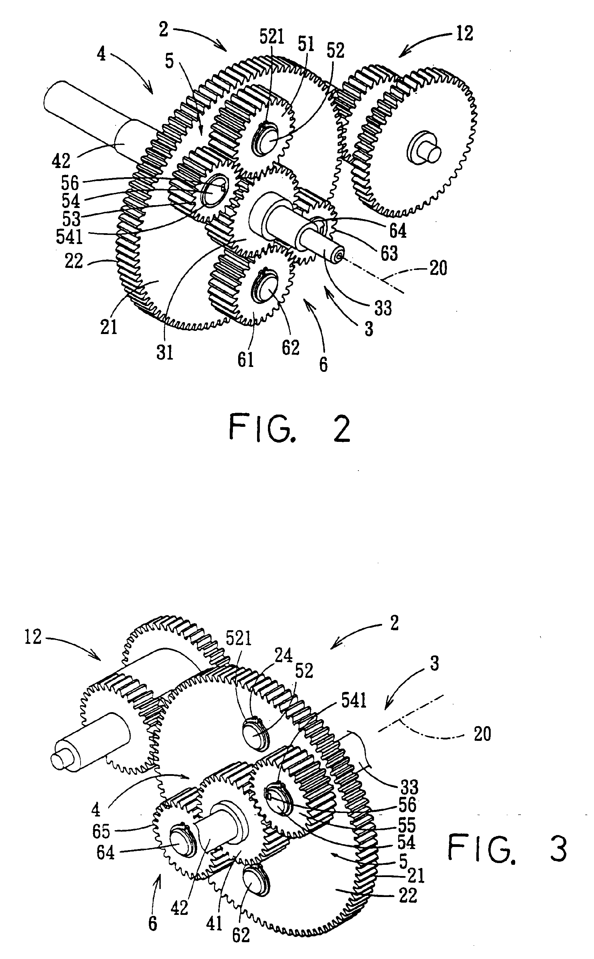

FIG. 2 is an oblique right side view in elevation of the present invention, showing the differential gear coupled to a driving gear set;
FIG. 3 is an oblique left side view in elevation of the present invention;
FIG. 4 is a schematic right side view of the present invention showing an operation status of the differential gear after start of the motor during normal movement of the motor vehicle;
FIG. 5 is a schematic view of the opposite side of FIG. 4;
FIG. 6 is a schematic right side view of the present invention showing an operation status of the differential gear when the motor vehicle turned to the right; and
FIG. 7 is a schematic view of the opposite side of FIG. 6.

### DETAILED DESCRIPTION OF THE PREFERRED EMBODIMENT

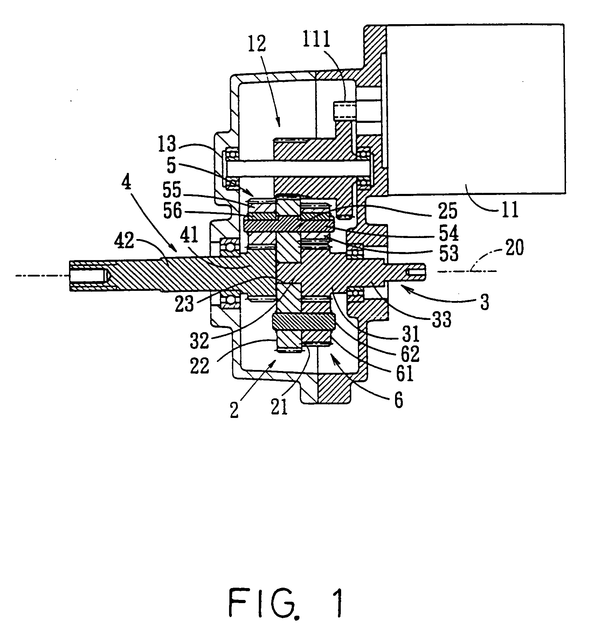

Referring to FIGS. 1∼3, a differential gear is shown installed in a rear-wheel-drive motor vehicle (not shown) and adapted to be driven by a motor **11** of the motor vehicle to rotate one rear right wheel (not shown) and one rear left wheel (not shown), so as to further move the motor vehicle. The differential gear provides a differential effect to the rear right wheel and the rear left wheel when desired. The differential gear may also be used in any of a variety of transportation vehicles, machine tools, or mechanical apparatus that comprise a drive equivalent to the motor 11, a first driven member equivalent to the aforesaid rear right wheel, and a second driven member equivalent to the aforesaid rear left wheel.

The differential gear comprises a main gear wheel **2**, a first output device **3**, a second output device **4**, a first planet gear set **5**, and a second planet gear set 6. The differential gear is mounted with a driving gear set **12** inside a dust-protective gear box **13** (see FIG. 1). The driving gear set **12** is meshed with the output shaft **111** of the aforesaid motor **11** (alternatively, any of a variety of suitable transmission mechanisms may be used and coupled between the output shaft **111** of the motor **11** and the driving gear set **12**).

The main gear wheel **2** is meshed with the driving gear **12**, and driven by the driving gear **12** to rotate on an imaginary axis **20**. The main gear wheel **2** has a first side **21** and a second side **22** opposite to the first side **21**.

The first output device **3** is comprised of a first sun gear **31**, a first axle **32**, and a first output shaft **33**. The first sun gear **31** is located on the first side **21** of the main gear wheel **2**. The first axle **32** is extended axially from the wheel center of the first sun gear **31** toward the outer (left) side, and inserted through an axle hole **23** in the wheel center of the main gear wheel **2** for free rotation relative to the main gear wheel **2**. Therefore, the first output device **3** can be rotated on the imaginary axis **20**, and the first axle **32** supports rotation of the main gear wheel **2**. The first output shaft **33** is extended axially from the wheel center of the first sun gear **31** toward the outer (right) side, and coupled to the rear right wheel of the aforesaid motor vehicle through a coupling device (not shown).

The second output device **4** is comprised of a second sun gear **41** and a second output shaft **42**. The second sun gear **41** is provided at the center of the second side **22** of the main gear wheel **2** for free rotation on the aforesaid imaginary axis **20**. The second output shaft **42** is extended axially from the center of the second sun gear **41** toward the outer (left) side, and coupled to the rear left wheel of the aforesaid motor vehicle through a coupling device (not shown).

The first planet gear set **5** is comprised of a first planet gear **51**, a first pivot shaft **52**, a second planet gear **53**, a second pivot shaft **54**, a third planet gear **55**, and a key **56.** The first planet gear **51** is provided at the first side **21** of the main gear wheel **2** and mounted on the outer (right) end of the first pivot shaft **52**. The inner (left) end of the first pivot shaft **52** is inserted through a through hole **24** in the main gear wheel **2,** keeping the first planet gear **51** meshed with the first sun gear **31** for free rotation on its own axis (pivot shaft **52**) and for synchronous movement with the main gear wheel **2** around the imaginary axis. Two retaining rings **521** are respectively fastened to the outer (right) and inner (let) ends of the first pivot shaft **52**, preventing falling of the first pivot shaft **52** from the first planet gear **51** or the main gear wheel **2**.

The second pivot shaft **54** is inserted through a second through hole **25** of the main gear wheel **2**. The second planet gear **53** and the third planet gear **55** are respectively mounted on the right and left ends of the second pivot shaft **54** and disposed at the first side **21** and second side **22** of the main gear wheel **2**. Two keys **56** connect the second planet gear **53** and the third planet gear **55** to the second pivot shaft **54** respectively to constrain the second planet gear **53** and the third planet gear **55** to rotate synchronously in the same direction. The second planet gear **53** is meshed with the first planet gear **51** but not in engagement with the first sun gear **31**. The third planet gear **55** is meshed with the second sun gear **41**. Two retaining rings **541** are respectively fastened to the two ends of the second pivot shaft **54,** preventing falling of the second pivot shaft **54** from the second planet gear **53** and the third planet gear **55**. According to this embodiment, the first planet gear **51** and the third planet gear **55** are identical. The number of teeth of the second planet gear **53** is less than the first planet gear **51** and the third planet gear **55**.

The second planet gear set **6** is symmetrical to the first planet gear set, comprised of a fourth planet gear **61**, a third pivot shaft **62**, a fifth planet gear **63**, a fourth pivot shaft **64**, and a sixth planet gear **65**. The fourth planet gear **61** is pivotally fastened to the first side **21** of the main gear wheel **2** by the third pivot shaft **62**. The third pivot shaft **62** and the first pivot shaft **52** are symmetrically disposed at two sides relative to the first sun gear **31**. The fifth planet gear **63** and the sixth planet gear **65** are respectively pivoted to the first side **21** and second side **22** of the main gear wheel **2** by the fourth pivot shaft **64** for synchronously rotation. The fourth pivot shaft **64** and the second pivot shaft **54** are symmetrically disposed at two sides relative to the first sun gear **31**. The number of teeth of the fifth planet gear **63** is equal to the second planet gear **53**. The number of teeth of the fourth and sixth gears **61** and **65** is equal to the first and third planet gears **51** and **55**.

Before starting the motor **11**, the left and right wheels of the motor vehicle are immovable, and the static friction between the wheels of the motor vehicle and the ground imparts a resistance to the first sun gear **31** and the second sun gear **41** to stop the first and second sun gears **31** and **41** from rotation. When the motor **11** started to rotate the main gear wheel **2**, the first pivot shaft **52** and the second pivot shaft **54** are forced to move the first planet gear **51** and the third planet gear **55** with the main gear wheel **2**. Thereby, the first sun gear **31** and the second sun gear **41** are rotated in the direction same as the main gear wheel **2**.

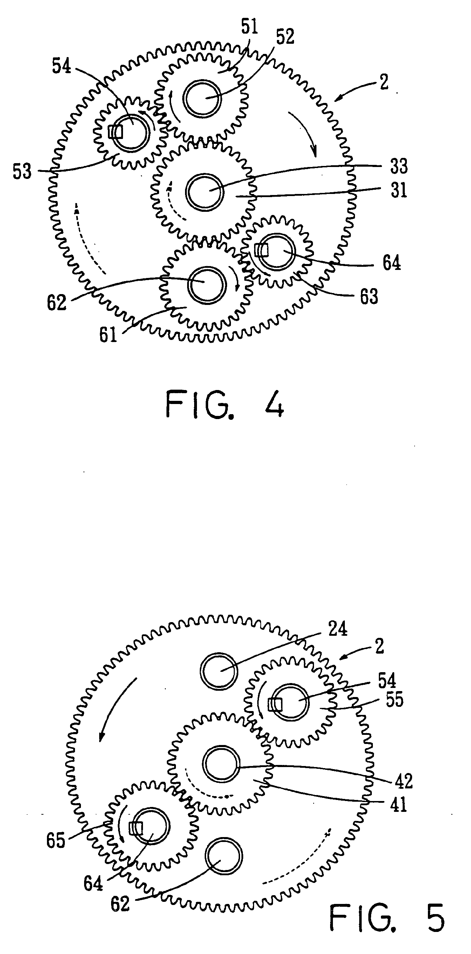

If the torque of the motor **11** is lower than the wheel resistance that the first sun gear **31** and the second sun gear **41** cannot be rotated, the first planet gear **51** and the third planet gear **55** tend to rotate on the first pivot shaft **52** and the second pivot shaft **54** respectively in the direction same as the main gear wheel **2** (see the arrow shown in FIGS. 4 and 5). But the second planet gear **53** and the third planet gear **55** must be rotated synchronously in the same direction, and the second planet gear **53** and the first planet gear **51** are meshed together and prohibited from a rotation in the same direction, so that the first, second, and third planet gears **51**, **53**, and **55** and the main gear wheel **2** are stopped from rotation at this time. Once the torque of motor **11** overcome the wheel resistance, the main gear wheel **2** rotated by the torque of the motor **11** on axle **32**, and also the first planet gear **51** and, the third planet gear **55** are rotated on axle **32**, thereby causing the first sun gear **31** and the second sun gear **41** to be rotated in the direction same as the main gear wheel **2**, and therefore the rear right and left wheels of the motor vehicle are rotated (see the imaginary arrow shown in FIGS. 4 and 5).

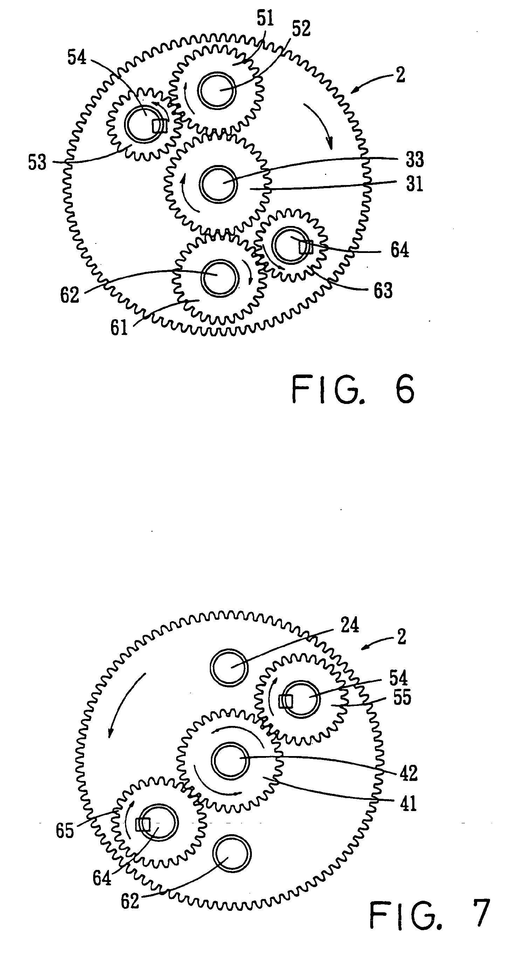

When the motor vehicle turned toward the right, the friction between the rear right wheel and the ground is increased, and the first sun gear **31** is decelerated, and at this time, as shown in FIGS. 6 and 7, the first planet gear **51** is rotated on pivot shaft **52** in the direction same as the main gear wheel **2**, thereby causing the second planet gear **53** to rotate on pivot shaft **54** in the direction reversed to the first planet gear **51**, and therefore the third planet gear **55** and the second planet gear **53** are synchronously rotated on pivot shaft **54** in the same direction. At this time, the third planet gear **55** drives the second sun gear **41** to rotate in the direction same as the main gear wheel **2**. The rotating of the third planet gear **55** on pivot shaft **54** accelerates the rotation of the second sun gear **41**, thereby causing the rear left wheel of the motor vehicle to be rotated at a speed relatively higher than the rear right wheel, and therefore the motor vehicle is turned to the right.

A prototype of differential gear has been constructed with the features of FIGS. 1∼7. The differential gear functions smoothly to provide all of the features discussed earlier.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A differential gear to be driven by a driving device to rotate a first driven member and a second driven member, the differential gear comprising:
a main gear wheel to be driven by said driving gear to rotate on an imaginary axis, said main gear wheel having a first side and a second side opposite to said first side;
a first output device, said first output device comprising a first sun gear pivoted to the first side of said main gear wheel for free rotation on said imaginary axis, and a first output shaft extended axially outwardly from the center of said first sun gear along said imaginary axis and adapted to rotate said first driven member;
a second output device, said second output device comprising a second sun gear pivoted to the second side of said main gear wheel for free rotation on said imaginary axis, and a second output shaft extended axially outwardly from the center of said second sun gear along said imaginary axis and adapted to rotate said second driven member; and
a first planet gear set, said first planet gear set comprising a first planet gear pivoted to the first side of said main gear wheel and meshed with said first sun gear, a second planet gear pivoted to the first side of said main gear wheel and meshed with said first planet gear, and a third planet gear pivoted to the second side of said main gear wheel and meshed with said second sun gear for synchronous rotation with said second planet gear in direction same as said second planet gear.

2. The differential gear as claimed in claim 1, wherein said main gear wheel has an axle hole through which said imaginary axis passes; said first output device further comprises a first axle extended axially from the center of said first sun gear and inserted through said axle hole of said main gear wheel for free rotation in said axle hole of said main gear wheel.

3. The differential gear as claimed in claim 1, wherein said main gear wheel further comprises a first through hole adjacent to said first planet gear; said first planet gear set further comprises a first pivot shaft pivotally inserted through said first through hole of said main gear wheel; said first planet gear is fastened pivotally with said pivot shaft and meshed with said first sun gear.

4. The differential gear as claimed in claim 1, wherein said main gear wheel further comprises a second through hole adjacent to said second planet gear; said first planet gear set further comprises a second pivot shaft, which pivots said second planet gear and said third planet gear to said second through hole of said main gear wheel, and two keys connect said second planet gear and said third planet gear to said second pivot shaft respectively to constrain said second planet gear and said third planet gear to rotate synchronously in same direction.

5. The differential gear as claimed in claim 4 further comprising a second planet gear set, said second planet gear set comprising a fourth planet gear pivoted to the first side of said main gear wheel and meshed with said first sun gear, a fifth planet gear pivoted to the first side of said main gear wheel and meshed with said fourth planet gear, and a sixth planet gear pivoted to the second side of said main gear wheel and meshed with said second sun gear for synchronous rotation with said fifth planet gear in same direction, the number of teeth of said fifth planet gear being less than said fourth planet gear and said sixth planet gear.
